# EUROPEAN PATENT APPLICATION

(11) **EP 0 562 742 A1**
(43) Date of publication of application: **29.09.1993**
(21) Application number: 93301847.5
(22) Date of filing: 11.03.1993
(51) Int. Cl.: H04N 9/31

(54) **Direct retinal scan display**

(30) Priority: 25.03.1992 US 857193
(71) Applicant: MOTOROLA, INC., Schaumburg, IL 60196 (US)
(72) Inventor: Jachimowicz, Karen E., Goodyear, Arizona 85338 (US); Moyer, Curtis D., Phoenix, Arizona 85044 (US); Song, John, Tempe, Arizona 85284 (US)
(74) Representative: Dunlop, Hugh Christopher

(57) **Abstract**

A display which writes an image directly on the retina of an eye. The display includes a laser (20) which produces a collimated light beam that is modulated (22) with video information and is then scanned (24) and directed through the eye pupil (28) to produce an image on the retina. The scanning uses micro-machined mirrors, electro-optic or acousto-optic devices (32, 34) which are extremely small and require very low power.

## Description

The present invention pertains to optical displays and more specifically to a direct retinal scan display.

### Background of the Invention

Generally, optical displays are relatively large and complicated as evidenced, for example, by television and computer displays. Even when relatively small virtual display devices, such as disclosed in a copending European patent application no. 92115263.3 entitled "Compact Virtual Image Display" and assigned to the same assignee, are utilized, relatively high amounts of power are required. Generally this is caused by the fact that an incoherent image is produced and focused, by a plurality of lenses including the lens in the eye, onto the retina of the eye. Producing the incoherent image, whether it is real or virtual, requires substantial amounts of power and apparatus, which results in large and unwieldily structure.

### Summary of the Invention

It is a purpose of the present invention to provide a new and improved direct retinal scan display.

It is a further purpose of the present invention to provide a new and improved direct retinal scan display which is smaller and requires less power than prior display devices.

It is a further purpose of the present invention to provide a method of directly scanning an image on the retina of a human eye.

The above problems are solved and purposes realized by a direct retinal scan display including means for providing a collimated laser beam modulated with video information, and head mounted means for mounting the display on the head of an operator and scanning the beam on the retina of an eyeball of the operator to write an image thereon.

The above problems are solved and purposes realized by a method of forming a direct retinal scan display including the steps of providing a collimated laser beam modulated with video information, and scanning the beam on the retina of a human eyeball to write an image thereon.

### Brief Description of the Drawings

Referring to the drawings:
FIG. 1 is an optical light ray diagram of a human eye viewing an ordinary image;
FIG. 2 is an optical light ray diagram illustrating a basic principal of the present invention;
FIG. 3 is a block diagram of a direct retinal scan display in accordance with the present invention;
FIG. 4 is a view in perspective of a specific deflection system for the direct retinal scan display of FIG. 3;
FIG. 5 is a detailed optical ray diagram of a portion of the deflection system of FIG. 4;
FIG. 6 is a view in perspective of a another specific deflection system for the direct retinal scan display of FIG. 3;
FIG. 7 is an optical light ray diagram of the direct retinal scan display of FIG. 3; and
FIG. 8 illustrates an embodiment of a complete direct retinal scan display in accordance with the present invention.

### Description of the Preferred Embodiment

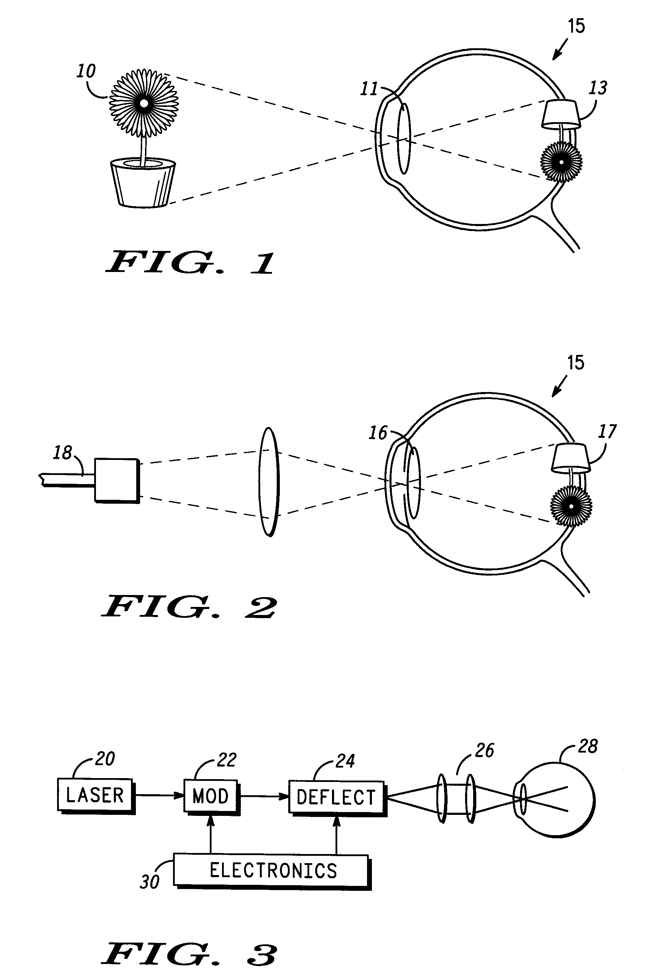

FIG. 1 illustrates an optical light ray diagram of a human eye viewing an ordinary image. This diagram represents the ordinary display which produces an incoherent image 10 by some convenient means (not shown). Incoherent image 10 is focussed by a lens 11 of the eye 12 onto the retina 13 of eye 12. Producing image 10 requires a relatively large amount of power, most of which is wasted in producing light that eye 12 either does not receive or does not use.

FIG. 2 is an optical light ray diagram illustrating a basic principal of the present invention. An eye 15 is illustrated having a lens 16 and a retina 17. A light beam 18, from a laser or the like, is directly scanned across retina 17, creating an image on retina 17 without requiring a previous image plane or collection of light from an incoherent image. In direct retinal scanning an image does not necessarily exist in space before it is scanned onto retina 17. Light beam 18 "writes" the image directly onto retina 17 and the first occurrence of an image plane may be at retina 17.

FIG. 3 is a block diagram of a direct retinal scan display in accordance with the present invention. A laser 20, which may be any of the well known lasers including solid state lasers, such as vertical cavity surface emitting lasers, diode lasers, diode-pumped lasers, etc., supplies a coherent light beam to a modulator 22. Modulator 22 impresses video information onto the light beam generally by modulating the intensity of the light beam as, for example, by providing changes in the power level of laser 20. Depending upon the application, the modulation could be as simple as turning laser 20 off and on, which essentially translates into a digital system. Acousto-optic modulators are one of the preferred modulators for most applications, but other techniques, such as electro-optics and mechanical are completely feasible.

The modulated light beam from modulator 22 is directed to a deflection system 24. A lens system 26 is used to focus the light beam from deflection system 24 into an eye 28. The focal length of lens system 26 is chosen so that the scanning system focal point is within the pupil of eye 28 and the coherent beam focal point is at the retina of eye 28. The purpose of deflection system 24 is to scan the modulated light beam on the retina of eye 28, or "write" an image on the retina. There are many possible configurations for deflection system 24 and lens system 26, depending upon the application of the display and how it is desired to form the image in eye 28.

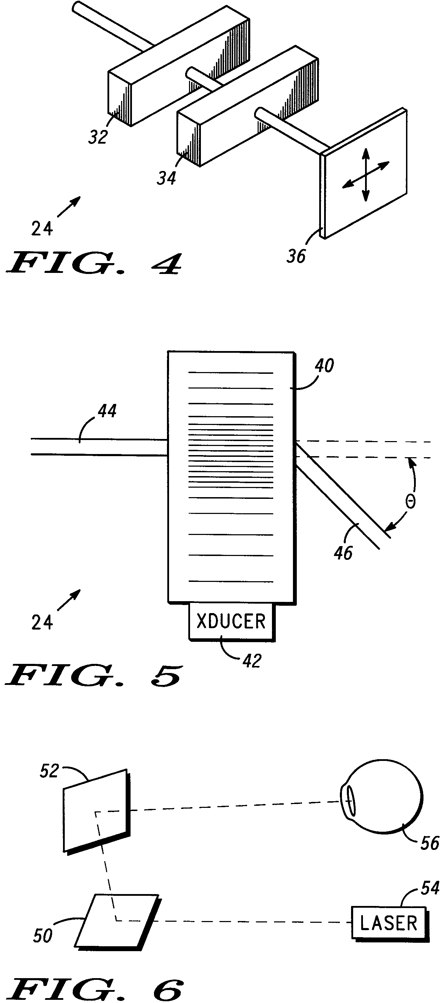

FIG. 4 illustrates one embodiment of a specific deflection system 24. In FIG. 4, deflection system 24 includes an acousto-optic horizontal scanner 32 and an acousto-optic vertical scanner 34 which in combination produce a moving spot of light on a retina or, for purposes of explanation, screen 36. Acousto-optic components are small, solid state crystals which are used for deflecting laser beams and the like. In this specific embodiment scanners 32 and 34 are constructed similarly and one is oriented orthogonal to the other. Since scanners 32 and 34 are constructed similarly, only one scanner will be discussed in detail.

Referring to FIG. 5, an optical ray diagram of scanner 32 is illustrated, along with basic components incorporated into scanner 32. An acousto-optic crystal 40 has a transducer 42 mounted thereon for applying a variable pressure thereto generally perpendicular to a light beam 44 impinging thereon. The operation of acousto-optic crystals is known in the art, as evidenced, for example, by the following article and book: Lekavich, J. (1986), Basics of Acousto-Optic Devices, *Lasers Appl.,* April; 59 - 64 and Yariv, A. and P. Yeh (1984), *Optical Waves in Crystals,* Wiley, New York. Crystal 40 is constructed so that variations in the index of refraction occur generally perpendicular to light beam 44 as pressure variations are applied to crystal 40. In general, the angle 0 is dependent upon the frequency of the signal applied to transducer 42 so that the exact angle of deflection is easily controlled electronically. As transducer 42 changes the index of refraction of crystal 40 in one direction (upwardly in FIG. 5), light beam 44 is deflected downwardly, as illustrated by solid arrow 46. As transducer 42 changes the index of refraction of crystal 40 in the opposite direction, light beam 44 is slowly deflected in the opposite direction (upwardly in FIG. 5). Thus, transducer 42 can be controlled electronically to cause light beam 44 to trace a line in one direction.

Scanner 34 is constructed to receive light beam 46 from scanner 32 and deflect light beam 46 in a direction orthogonal to the direction that scanner 32 deflects it. Thus, scanners 32 and 34 cooperate to move the light spot produced on screen 36 in any desired direction or to any desired position. It should be noted that the acousto-optic crystal in scanner 34 may be somewhat more complicated, or larger, than crystal 40, since the light beam will already be deflected when it is received by scanner 34. Since the image written on the retina is less than 0.5 inches on a side, the amount of movement of the beam at scanners 32 and 34 is very small and, therefore, this difference in size is very small. In applications where size is not a problem the crystals will be similar in size and construction, for easy standardization.

While there are several possible techniques for scanning, or writing, an image on the retina, probably the simplest is to scan a complete raster (rectangularly shaped image area) on the retina at regular intervals. The regular intervals must be sufficiently fast so that it appears to the eye to be a continuous image, which means that a complete scan must be made approximately 60 times per second. To provide this raster, crystal 40 is controlled by transducer 42 to scan light beam 44, generally linearly, in a straight line at a first frequency. The crystal in scanner 34 is controlled by its transducer to slowly scan light beam 44 in a direction orthogonal to the direction swept by crystal 40. Thus, each time crystal 40 scans a complete line the crystal of scanner 34 moves the beam sufficiently so that the next scan is parallel with and adjacent the previous scan. In this way a complete raster is scanned periodically.

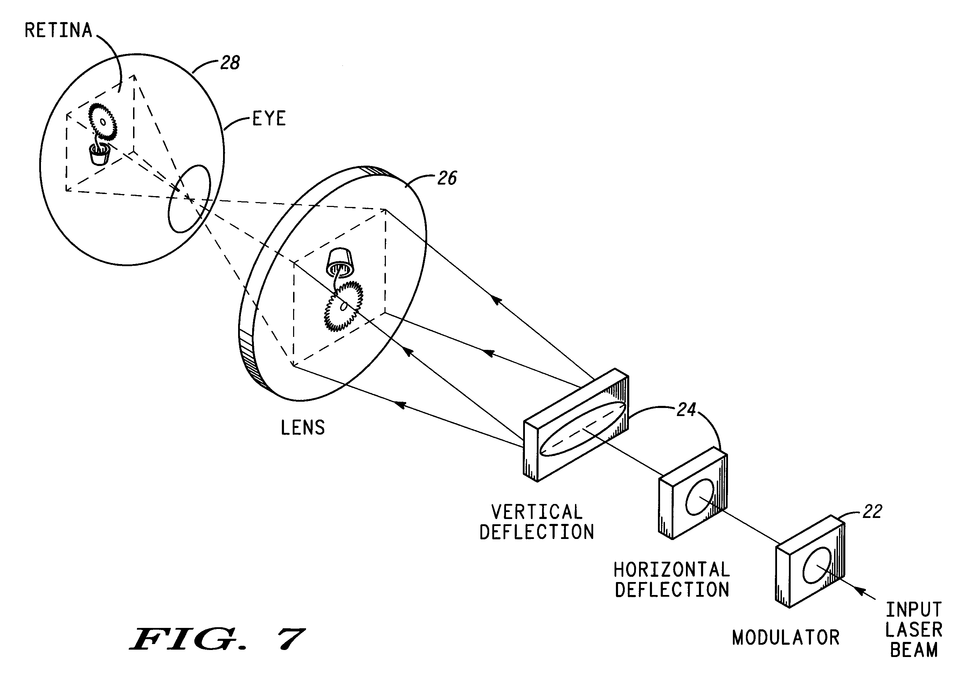

To produce an image, modulator 22 must be controlled to vary the intensity of light beam 44 so that, as light beam 44 is swept through a complete raster, spots of different light intensity combine to form an image. Timing and control of modulator 22 and deflection system 24 is provided by electronics 30. Electronics 30 includes a basic oscillator, or timer, which provides the timing signals to cause the sweeping and modulating to occur at the proper times. Also, electronics 30 provides video signals to modulator 22 to modulate light beam 44 to the correct intensity at the required times. Further, electronics 30 provides horizontal and vertical (orthogonal) deflection signals to cause deflection system 24 to periodically scan light beam 44 in a raster. Depending upon the application and the desired image resolution, the horizontal deflection frequency may be on the order of 15 to 30 kHz., the vertical deflection is no lower than 60 Hz., and the modulating frequency may be on the order of 12 MHz. FIG. 6 is a view in perspective of another specific deflection system for the direct retinal scan display of FIG. 3. The deflection system of FIG. 6 includes a first mirror 50 and a second mirror 52. Mirror 50 is situated to receive a beam of light from a light source, such as laser 54, and scan the beam of light in a horizontal line. Mirror 52 is situated to receive the horizontally scanned beam of light and scan it in an orthogonal, or in this specific example, a vertical direction and to direct the light beam into eye 56. Thus a complete image scan is available at eye 56. Mirrors 50 and 52 are very small and low power, such as small galvanometer mirrors, or micro-machined mirrors. It will of course be understood that any combination of these or other various deflection systems such as electro-optic, phased array, moving mirror, etc. can be used, if desired, for specific applications.

Referring specifically to FIG. 7, an optical light ray diagram of the direct retinal scan display of FIG. 3 is illustrated. In this ray diagram it can be seen that a light beam from a source such as a laser is directed to modulator 22. The modulated beam is directed through horizontal and vertical scanners in deflection system 24 to scan a raster at lens system 26. Lens system 26 is illustrated as a single lens for simplicity but it will be understood that one or several lenses may be utilized depending upon the application. Lens system 26 focuses the raster through the pupil of eye 28 so that an image is written on the retina of eye 28 and, simultaneously, lens system 26 focuses the coherent light beam to a focal point at the retina. In some applications it will be convenient to make lens system 26 with an adjustable focus so that operators with different vision can quickly adjust the display to fit their eyes.

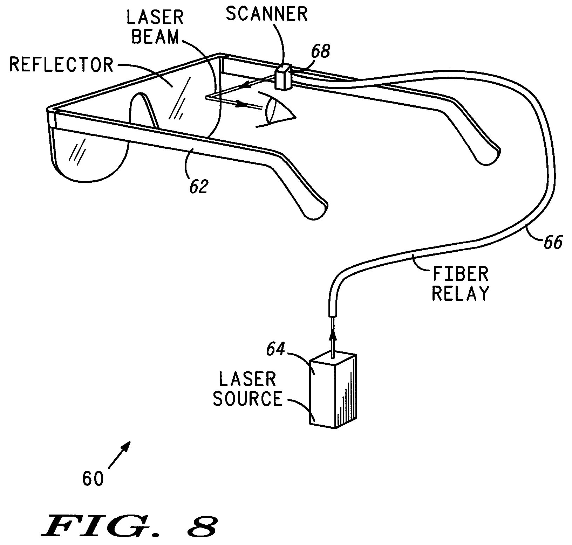

Referring to FIG. 8, an embodiment of a complete retinal scan display 60 is illustrated. In this specific embodiment a frame 62 for eye glasses is utilized to mount direct retinal scan display 60 on the head of an operator. As will be apparent presently, frame 62 may contain standard eye glasses for ordinary use, in addition to being used for display 60, or may be utilized only for the purpose of display 60. A laser source and modulator is contained in a portion 64 of display 60, which portion 64 is carried in some convenient place on the body, such as a shirt pocket. Portion 64 produces a modulated beam of light which is carried by one or more light fibers 66 to a second portion 68 of display 60. Portion 68 contains the deflection system and focussing optics and is mounted on one temple of frame 60 so that the output beam of light is reflected by a glass in the bow portion of frame 62, into the eye of the person wearing frame 62. Thus, in this embodiment a reflector, which forms a portion of lens system 26 (see FIGS. 3 or 7), is mounted in some convenient position on the bow of frame 62 to direct the modulated, scanned light beam into the eye of the wearer.

It will of course be understood that in some applications the entire display will be formed in a single unit or portion and mounted adjacent or in front of the eye of the wearer. In the embodiment of FIG. 8 much of display 60 is remotely mounted to reduce the size and weight of the portion 68 mounted on the temple of frame 62. It should also be understood that the direct retinal display does not have to be head-mounted, but can be an embodiment where the display device is part of a hand-held unit, such as a payer, radio, phone, hand-held computer, or personal communicator. The user will position the hand-held device with the display in front of the eye for viewing. Also, the direct retinal scan display can be used in a binocular, panoramic, and/or stereo mode, where one display is used for each eye. The outside world view can either be blocked, so both eyes see only the image from the displays, or the display image can overwrite the outside world view, creating a composite image.

Thus, a new and improved direct retinal scan display is disclosed which "writes" a display directly onto the retina of a human eye. Because the display is directly written, very low power is required and the size and complexity of the display is substantially reduced. Also, because of the extremely low power utilized, the display can be constructed very small and is, therefore, more convenient and useful than prior displays.

## Claims

1. A direct retinal scan display including a light source (20) and characterized by:
optical means (20) positioned to receive light from the light source for forming a directed beam of light;
modulating means (22) positioned to receive the beam of light for impressing video information onto the beam of light;
deflection means (24) positioned to receive the modulated beam of light for deflecting the beam of light through a predetermined angle;
optical means (26) for collecting light from the deflection means (24) and directing the collected light into an eye (28) so the collected light scans the retina; and
electronic means (30) coupled to the modulating means (22) and the deflection means (24) for controlling the modulating means (22) and the deflection means (24) to produce an image on the retina.

2. A direct retinal scan display as claimed in claim 1 further characterized in that the light source includes a laser (20) and the laser power entering the eye (28) is no stronger than approximately 20 microwatts.

3. A direct retinal scan display as claimed in claim 1 further characterized in that the light source includes a laser (20) and the deflection means (24) includes reflecting surfaces (52, 50) moveably mounted to direct the light beam generally in two orthogonal directions.

4. A direct retinal scan display as claimed in claim 1 further characterized by mounting means (62) for positioning the display on the head of an operator.

5. A direct retinal scan display as claimed in claim 4 further characterized in that the mounting means includes eye glass frames (62).

6. A direct retinal scan display as claimed in claim 1 further characterized in that the optical means includes means for producing a collimated beam of light (20).

7. A direct retinal scan display as claimed in claim 1 further characterized in that the deflection means (24) includes one of an acousto-optic scanner, an electro-optic scanner and a mechanical scanner (32, 34 or 50, 52).

8. A direct retinal scan display as claimed in claim 1 further characterized in that the modulating means (22) includes one of an electro-optic modulator, an acousto-optic modulator and a mechanical modulator.

9. A direct retinal scan display as claimed in claim 8 further characterized in that the mechanical scanner includes one of a moving mirror and a micro-machined mirror (50, 52).

10. A method of forming a direct retinal scan display characterized by the steps of:
providing a directed beam of light (20);
modulating (22) the beam of light to impress video information onto the beam of light; and
deflecting (24) the beam of light to scan the beam of light over a retina to produce an image on the retina.
